# EUROPÄISCHE PATENTANMELDUNG

(11) **EP 4 116 275 A1**
(43) Veröffentlichungstag der Anmeldung: **11.01.2023**
(21) Anmeldenummer: 21184423.8
(22) Anmeldetag: 08.07.2021
(51) Int. Cl.: C04B 28/06, F16B 13/14, E21D 20/02

(54) **BEFESTIGUNGSANORDNUNG MIT EINER GEWINDEFORMENDEN SCHRAUBE UND EINER AUSGEHÄRTETEN ALUMINATHALTIGEN ANORGANISCHEN MASSE**

(71) Anmelder: Hilti Aktiengesellschaft, 9494 Schaan (LI)
(72) Erfinder: Schönlein, Markus, 82205 Gilching (DE); Kumru, Memet-Emin, 86199 Augsburg (DE)
(74) Vertreter: Hilti Aktiengesellschaft Corporate Intellectual Property

(57) **Zusammenfassung**

Beschrieben wird eine Befestigungsanordnung mit einer Schraube, welche einen Schaft und zumindest eine Gewindewendel aufweist, wobei die Gewindewendel am Schaft angeordnet ist, und mit einer ausgehärteten Masse, wobei die Schraube in einem Loch in einem Substrat angeordnet ist und zwischen dem Schaft und der Lochwand ein Spalt vorgesehen ist, welcher mit der ausgehärteten aluminathaltigen anorganischen Masse gefüllt ist.

## Beschreibung

Die Erfindung betrifft eine Befestigungsanordnung mit einer gewindeformenden Schraube und einer ausgehärteten aluminathaltigen anorganischen Masse, wobei die gewindeformende Schraube in einem Loch in einem Substrat, insbesondere in einem mineralischen Baustoff wie Beton, angeordnet ist und zwischen dem Schaft der Schraube und der Lochwand ein Spalt vorgesehen ist, welcher mit der ausgehärteten aluminathaltigen anorganischen Masse gefüllt ist.

Aus der EP 0 623 759 B1 ist eine gewindeformende Schraube zum Einschrauben in harte Untergründe bekannt. Aus der EP 1 536 149 A2 ist eine Innengewindehülse mit einem selbstschneidenden Gewinde bekannt. Aus der US 4,350,464 A ist eine schlagend setzbare Ankerstange bekannt, die an einem Schaft als Grundkörper ein selbstfurchendes Gewinde aufweist.

Nachteilig an den bekannten Lösungen ist, dass aufgrund der Eigenschaften des Untergrundes und der Art und des Zustandes des Werkzeuges zum Erstellen des Loches die Größe des Ringspaltes zwischen der Mantelfläche des Schraubengrundkörpers und der Lochwandung von Befestigungspunkt zu Befestigungspunkt stark variieren kann. Zudem können hohe Belastungen auf die von dem Gewinde erzeugten Hinterschnitte im Substrat wirken, welche zu einem teilweisen oder - im extremsten Fall - zu einem vollständigen Versagen des erstellten Befestigungspunktes führen. Um dies zu vermeiden und eine hohe Tragfähigkeit zu erreichen, weisen derartige gewindeformende Schrauben, insbesondere Betonschrauben, eine relativ große Einbindelänge des Gewindes im Substrat auf, was jedoch einen hohen Aufwand zum Setzen der entsprechenden Schraube bedingt.

Darüber hinaus führen herkömmliche Betonschrauben ohne Kombination mit einem chemischen Bindemittel während des Installationsprozesses zu einem schlechten Verbund aufgrund von Rissen und Hohlräumen entlang der Grenzfläche Schraube/Beton. Dieser schlechte Verbund führt zu niedrigen Lastwerten und ermöglicht das Eindringen von korrosionsfördernden Chemikalien, wie z.B. Chloriden.

Aus der DE 198 20 671 A1, der DE 103 11 471 A1 oder der DE 10 2006 000 414 A1 ist eine gewindeformende Schraube bekannt, die in ein zuvor mit einer aushärtbaren Masse befülltes Bohrloch gesetzt wird. Das Gewinde der Schraube ist nach dem Aushärten der aushärtbaren Masse in dem Substrat und in der Masse verankert.

Bekannte aushärtbare Massen, wie beispielsweise der aus der DE 10002605 A1 bekannte Zweikomponentenmörtel auf Epoxidbasis oder der aus der DE 3514031 A1 bekannte Zweikomponentenmörtel auf Basis radikalisch härtbarer Verbindungen, weisen einen hohen Füllstoffanteil auf, was eine hohe Viskosität und geringes Schrumpfverhalten bei einer ausreichenden inneren Festigkeit der ausgehärteten Masse gewährleistet.

Nachteilig an der Lösung etwa gemäß der DE 198 20 671 A1 ist zudem, dass der Ringspalt zwischen der Mantelfläche des Grundkörpers der Schraube und der Bohrlochwandung eine ausreichende Größe aufweisen muss, so dass neben dünnflüssigen Massen auch aushärtbare Massen mit Füllstoffen verwendbar sind. Zur vollständigen Verfüllung dieses Ringspaltes ist somit eine große Menge der aushärtbaren Masse erforderlich.

Die für andere Befestigungselemente, wie Ankerstangen und dergleichen, bekannten Patronensysteme, wie sie etwa aus der EP 0 431 302 A2, der EP 0 432 087 A1, der EP 0 312 776 A1 oder der EP 0 638 705 A1 bekannt sind, sind aufgrund des sehr kleinen Ringspalts für die Anwendung mit gewindeformenden Schrauben nicht geeignet, da sie entweder zu grobkörnige Füllstoffe enthalten oder die Patronen nicht mit herkömmlichen gewindeformenden Schrauben zerkleinert werden können oder die Patronen selbst beim Zerkleinern zu große Partikel ergeben. Da bei dieser Anwendung nur wenige Schraubendrehungen möglich sind, bis die Schraube gesetzt ist, muss eine schnelle Durchmischung der aushärtbaren Masse gewährleistet sein, damit diese zuverlässig aushärtet, was mit den bekannten Massen bisher nicht möglich ist.

Herkömmliche organische Bindemittelsysteme, wie z.B. Harze, können den Verbund zwischen Schraube und Beton zwar stärken, aber geht dieser Effekt bei erhöhten Temperaturen verloren.

Aufgabe der Erfindung ist es, eine Befestigungsanordnung anzugeben, die besonders einfach und sicher zu erstellen ist und mit der eine leistungsfähige und zuverlässige Befestigung einer gewindeformenden Schraube möglich ist, insbesondere den Verbund stärkt was zu einer Erhöhung der Lastwerte führt, welche auch bei hohen In-Service Temperaturen und im Brandfall erhalten bleiben.

Diese Aufgabe wird erfindungsgemäß durch eine Befestigungsanordnung mit den Merkmalen des Anspruchs 1 gelöst. Bevorzugte Ausführungsformen sind in den abhängigen Ansprüchen angegeben.

Die erfindungsgemäße Befestigungsanordnung ist dadurch gekennzeichnet, dass die ausgehärtete Masse durch Härtung eines mehrkomponentigen zementösen aluminathaltigen anorganischen Systems erhältlich ist, das in einer Komponente mindestens einen aluminathaltigen Zement-Bestandteil und mindestens ein Blockierungsmittel, ausgewählt aus der Gruppe bestehend aus Phosphorsäure, Metaphosphorsäure, phosphoriger Säure, Phosphonsäuren, Borsäure, in wässriger Phase, und in einer weiteren Komponente einen Initiator für den aluminathaltigen Zement-Bestandteil enthält.

Das mehrkomponentige zementöse aluminathaltige anorganischen System, welches in der erfindungsgemäßen Befestigungsanordnung zum Einsatz kommt, enthält in einer Komponente (auch aluminathaltige Komponente genannt) mindestens einen aluminathaltigen Zement-Bestandteil und mindestens ein Blockierungsmittel, ausgewählt aus der Gruppe bestehend aus Phosphorsäure, Metaphosphorsäure, phosphoriger Säure, Phosphonsäuren, Borsäure, in wässriger Phase und in einer weiteren Komponente (auch Initiator-Komponente genannt) einen Initiator für den aluminathaltigen Zement-Bestandteil.

Die aluminathaltige Komponente und die Initiator-Komponente sind bis zur Verwendung des zementösen anorganischen Systems räumlich getrennt voneinander verpackt, damit erst eine Reaktion stattfindet, wenn die beiden Komponenten miteinander in Kontakt gebracht werden.

Die beiden Komponenten sind in der Regel in Folienbeutel verpackt, und liegen entweder als Side-by-Side- oder als Beutel-in-Beutel-System vor. Generell ist jedoch jedwede Verpackung und Verpackungsform möglich, bei der die beiden Komponenten getrennt voneinander verpackt sind und die sich durch das Setzen der gewindeformenden Schraube leicht öffnen und durch die Schraube zermahlen lässt.

Die aluminathaltige Komponente enthält einen aluminathaltigen Zement-Bestandteil basierend auf einem Calciumaluminat-Zement (CAC) in wässriger Phase oder einem Calciumsulfoaluminat-Zement (CAS) in wässriger Phase. Der aluminathaltige ZementBestandteil, insbesondere der calciumaluminat-haltige Zementbestandteil der in der vorliegenden Erfindung verwendet werden kann, ist durch ein rasches Absetzen und rasches Härten, rasches Trocknen und eine Schrumpfkompensation, wenn er mit Calciumsulfaten gemischt wird, eine ausgezeichnete Korrosions- und Schrumpfbeständigkeit gekennzeichnet. Ein solcher Calciumaluminat-Zement, der geeignet ist, in der vorliegenden Erfindung verwendet zu werden, ist zum Beispiel Ternal^{®} White (Imerys, Frankreich).

Wenn die aluminathaltige Komponente eine Mischung von aluminiumhaltigem Zement (CAC) und Calciumsulfat (CaSO4) umfasst, findet eine rasche Ettringit-Bildung während der Hydratisierung statt. In der Betonchemie wird Hexacalciumaluminattrisulfathydrat durch das Umsetzen von Calciumaluminat mit Calciumsulfat gebildet, was zu einem schnellen Absetzen und Härten sowie zu einer Schrumpfkompensation oder sogar Expansion führt. Mit einer moderaten Erhöhung des Sulfatgehalts kann die Schrumpfkompensation erzielt werden.

Die aluminathaltige Komponente umfasst mindestens ungefähr 40 Gew. %, vorzugsweise mindestens ungefähr 50 Gew. %, bevorzugter mindestens ungefähr 60 Gew. %, am meisten bevorzugt mindestens ungefähr 70 Gew. %, von ungefähr 40 Gew. % bis ungefähr 95 Gew. %, vorzugsweise von ungefähr 50 Gew. % bis ungefähr 90 Gew. %, bevorzugter von ungefähr 65 Gew. % bis ungefähr 85 Gew. %, am meisten bevorzugt von ungefähr 70 Gew. % bis ungefähr 80 Gew. % aluminiumhaltigen Zement, bezogen auf das Gesamtgewicht der aluminathaltigen Komponente.

Alternativ kann die aluminathaltige Komponente mindestens ungefähr 20 Gew. %, vorzugsweise mindestens ungefähr 30 Gew. %, bevorzugter mindestens ungefähr 40 Gew. %, am meisten bevorzugt mindestens ungefähr 50 Gew. %, von ungefähr 20 Gew. % bis ungefähr 80 Gew. %, vorzugsweise von ungefähr 30 Gew. % bis ungefähr 70 Gew. %, bevorzugter von ungefähr 35 Gew. % bis ungefähr 60 Gew. %, am meisten bevorzugt von ungefähr 40 Gew. % bis ungefähr 55 Gew. % aluminiumhaltigen Zement umfassen, bezogen auf das Gesamtgewicht der aluminathaltigen Komponente, und mindestens ungefähr 5 Gew. %, vorzugsweise mindestens ungefähr 10 Gew. %, bevorzugter mindestens ungefähr 15 Gew. %, am meisten bevorzugt mindestens ungefähr 20 Gew. %, von ungefähr 1 Gew. % bis ungefähr 50 Gew. %, vorzugsweise von ungefähr 5 Gew. % bis ungefähr 40 Gew. %, bevorzugter von ungefähr 10 Gew. % bis ungefähr 30 Gew. %, am meisten bevorzugt von ungefähr 15 Gew. % bis ungefähr 25 Gew. % Calciumsulfat, vorzugsweise Calciumsulfathemihydrat umfassen, bezogen auf das Gesamtgewicht der aluminathaltigen Komponente.

Das Blockierungsmittel, das in der aluminathaltigen Komponente enthalten ist, ist ausgewählt aus der Gruppe bestehend aus Phosphorsäure, Metaphosphorsäure, phosphoriger Säue, Phosphonsäuren und Borsäure, ist vorzugsweise Phosphorsäure oder Metaphosphorsäure, ist am meisten bevorzugt Phosphorsäure, insbesondere eine 85 % wässrige Lösung von Phosphorsäure. Die aluminathaltige Komponente umfasst mindestens ungefähr 0,1 Gew. %, vorzugsweise mindestens ungefähr 0,3 Gew. %, bevorzugter mindestens ungefähr 0,4 Gew. %, am meisten bevorzugt mindestens ungefähr 0,5 Gew. %, von ungefähr 0,1 Gew. % bis ungefähr 20 Gew. %, vorzugsweise von ungefähr 0,1 Gew. % bis ungefähr 15 Gew. %, bevorzugter von ungefähr 0,1 Gew. % bis ungefähr 10 Gew. %, am meisten bevorzugt von ungefähr 0,3 Gew. % bis ungefähr 10 Gew. % des Blockierungsmittels, bezogen auf das Gesamtgewicht der aluminathaltigen Komponente. In einer bevorzugten Ausführungsform umfasst die aluminathaltige Komponente von ungefähr 0,3 Gew. % bis ungefähr 10 Gew. % einer 85 % wässrigen Lösung von Phosphorsäure, bezogen auf das Gesamtgewicht der aluminathaltigen Komponente.

Die aluminathaltige Komponente kann einen Weichmacher enthalten. Geeignete Weichmacher sind dem Fachmann bekannt und können beispielsweise ausgewählt sein aus Polyacrylsäurepolymeren mit niedrigem Molekulargewicht (LMW), Superweichmachern aus der Familie von Polyphosphonatpolyox und Polycarbonatpolyox, und Ethacryl-Superweichmachern aus der Polycar-boxylatether-Gruppe, und Mischungen davon, zum Beispiel Ethacryl^{™} G (Coatex, Arkema Group, Frankreich), Acumer^{™} 1051 (Rohm und Haas, UK) oder Sika^{®} VisoCrete^{®}-20 HE (Sika, Deutschland). Geeignete Weichmacher sind im Handel erhältliche Produkte. Die aluminathaltige Komponente kann mindestens ungefähr 0,2 Gew. %, vorzugsweise mindestens ungefähr 0,3 Gew. %, bevorzugter mindestens ungefähr 0,4 Gew. %, am meisten bevorzugt ungefähr0,5 Gew. %, von ungefähr 0,2 Gew. % bis ungefähr 20 Gew. %, vorzugsweise von ungefähr 0,3 Gew. % bis ungefähr 15 Gew. %, bevorzugter von ungefähr 0,4 Gew. % bis ungefähr 10 Gew. %, am meisten bevorzugt von ungefähr 0,5 Gew. % bis ungefähr 5 Gew. % des Weichmachers umfassen, bezogen auf das Gesamtgewicht der aluminathaltigen Komponente.

In einer vorteilhaften Ausführungsform kann die aluminathaltige Komponente ferner die folgenden Charakteristiken, allein oder in Kombination umfassen.

Die aluminathaltige Komponente kann zusätzlich ein Verdickungsmittel umfassen. Die Verdickungsmittel, die verwendet werden können, sind dem Fachmann bekannt und können ausgewählt sein aus der Gruppe bestehend aus organischen Produkten, wie Xanthan-Gum, Welan-Gum oder DIUTAN^{®}-Gum (CPKelko, USA), von Stärke abgeleiteten Ethern, von Guar abgeleiteten Ethern, Polyacrylamid, Carragheenan, Agar, und mineralischen Produkten, wie Ton, und ihren Mischungen. Geeignete Verdickungsmittel sind im Handel erhältliche Produkte. Die aluminathaltige Komponente kann mindestens ungefähr 0,01 Gew. %, vorzugsweise mindestens ungefähr 0,1 Gew. %, bevorzugter mindestens ungefähr 0,2 Gew. %, am meisten bevorzugt mindestens ungefähr 0,3 Gew. %, von ungefähr 0,01 Gew. % bis ungefähr 10 Gew. %, vorzugsweise von ungefähr 0,1 Gew. % bis ungefähr 5 Gew. %, bevorzugter von ungefähr 0,2 Gew. % bis ungefähr 1 Gew. %, am meisten bevorzugt von ungefähr 0,3 Gew. % bis ungefähr 0,7 Gew. % des Verdickungsmittels umfassen, bezogen auf das Gesamtgewicht der aluminathaltigen Komponente.

Die aluminathaltige Komponente kann ferner ein antibakterielles oder Biozid-Mittel umfassen. Die antibakteriellen oder Biozid-Mittel können ausgewählt sein aus der Gruppe bestehend aus Verbindungen der Isothiazo-Iinon-Familie, wie Methylisothiazolinon (MIT), Octylisothiazolinon (OIT) und Benzoisothi-azolinon (BIT) und ihren Mischungen. Geeignete antibakterielle oder Biozid-Mittel sind im Handel erhältliche Produkte. Als Beispiel werden Ecocid K35R (Progiven, Frankreich) und Nuospet OB 03 (Ashland, Niederlande) angegeben. Die aluminathaltige Komponente kann mindestens ungefähr 0,001 Gew. %, vorzugsweise mindestens ungefähr 0,005 Gew. %, bevorzugter mindestens ungefähr 0,01 Gew. %, am meisten bevorzugt mindestens ungefähr 0,015 Gew. %, von ungefähr 0,001 Gew. % bis ungefähr 1,5 Gew. %, vorzugsweise von ungefähr 0,005 Gew. % bis ungefähr 0,1 Gew. %, bevorzugter von ungefähr 0,01 Gew. % bis ungefähr 0,075 Gew. %, am meisten bevorzugt von ungefähr 0,015 Gew. % bis ungefähr 0,03 Gew. % des antibakteriellen oder Biozid-Mittels umfassen, bezogen auf das Gesamtgewicht der aluminathaltigen Komponente.

Die aluminathaltige Komponente kann ferner mindestens einen Füllstoff, insbesondere einen organischen oder mineralischen Füllstoff, umfassen. Der Füllstoff kann ausgewählt sein aus der Gruppe bestehend aus Quarzpulver, vorzugsweise Quarzpulver mit einer gemittelten Korngröße (d50 %) von ungefähr 16 µm, Quarzsand, Ton, Flugasche, Quarzstaub, Carbonatverbindungen, Pigmenten, Titanoxiden, leichten Füllstoffen und ihren Mischungen. Geeignete mineralische Füllstoffe sind im Handel erhältliche Produkte. Als Beispiel wird Quarzpulver Millisil W12 oder W6 (Quarzwerke GmbH, Deutschland) angegeben. Die aluminathaltige Komponente kann mindestens ungefähr 1 Gew. %, vorzugsweise mindestens ungefähr 2 Gew. %, bevorzugter mindestens ungefähr 5 Gew. %, am meisten bevorzugt mindestens ungefähr 8 Gew. %, von ungefähr 1 Gew. % bis ungefähr 50 Gew. %, vorzugsweise von ungefähr 2 Gew. % bis ungefähr 40 Gew. %, bevorzugter von ungefähr 5 Gew. % bis ungefähr 30 Gew. %, am meisten bevorzugt von ungefähr 8 Gew. % bis ungefähr 20 Gew. % des mindestens einen Füllstoffs umfassen, bezogen auf das Gesamtgewicht der aluminathaltigen Komponente.

Der Wassergehalt, der in der aluminathaltigen Komponente enthalten ist, beträgt mindestens ungefähr 1 Gew. %, vorzugsweise mindestens ungefähr 5 Gew. %, bevorzugter mindestens ungefähr 10 Gew. %, am meisten bevorzugt mindestens ungefähr 20 Gew. %, von ungefähr 1 Gew. % bis ungefähr 50 Gew. %, vorzugsweise von ungefähr 5 Gew. % bis ungefähr 40 Gew. %, bevorzugter von ungefähr 10 Gew. % bis ungefähr 30 Gew. %, am meisten bevorzugt von ungefähr 15 Gew. % bis ungefähr 25 Gew. %, bezogen auf das Gesamtgewicht der aluminathaltigen Komponente.

Die Anwesenheit eines Weichmachers, Verdickungsmittels sowie eines antibakteriellen oder Biozid-Mittels verändert die gesamte anorganische Beschaffenheit der zementartigen Komponente nicht.

Die aluminathaltige Komponente ist in wässriger Phase, vorzugsweise in der Form einer Aufschlämmung oder Paste, vorhanden.

Die Initiator-Komponente der vorliegenden Erfindung umfasst einen Initiator für den aluminathaltigen Zement-Bestandteil.

Der Initiator, der in der Initiator-Komponente vorhanden ist, besteht aus einer Aktivator-Komponente und einer Beschleuniger-Komponente, die eine Mischung von Alkaliund/oder Erdalkalimetallsalzen umfassen.

Insbesondere umfasst die Aktivator-Komponente mindestens ein Alkali- und/oder Erdalkalimetallsalz, das ausgewählt ist aus der Gruppe bestehend aus Hydroxiden, Chloriden, Sulfaten, Phosphaten, Monohydrogenphosphaten, Dihydrogenphosphaten, Nitraten, Carbonaten und Mischungen davon, vorzugsweise ist die Aktivator-Komponente ein Alkali- und/oder Erdalkalimetallsalz, bevorzugter ist sie ein Calciummetallsalz, wie Calciumhydroxid, Calciumsulfat, Calciumcarbonat oder Calciumphosphat, ein Natriummetallsalz, wie Natriumhydroxid, Natriumsulfat, Natriumcarbonat oder Natriumphosphat, ein Kaliummetallsalz, wie Kaliumhydroxid, Kaliumsulfat, Kaliumcarbonat oder Kaliumphosphat, oder ein Lithiummetallsalz, wie Lithiumhydroxid, Lithiumsulfat, Lithiumcarbonat oder Lithiumphosphat, am meisten bevorzugt ist sie Natriumhydroxid.

Die Initiator-Komponente umfasst ungefähr mindestens ungefähr 0,01 Gew. %, vorzugsweise mindestens ungefähr 0,02 Gew. %, bevorzugter mindestens ungefähr 0,05 Gew. %, am meisten bevorzugt mindestens ungefähr 1 Gew. %, von ungefähr 0,01 Gew. % bis ungefähr 40 Gew. %, vorzugsweise von ungefähr 0,02 Gew. % bis ungefähr 35 Gew. %, bevorzugter von ungefähr 0,05 Gew. % bis ungefähr 30 Gew. %, am meisten bevorzugt von ungefähr 1 Gew. % bis ungefähr 25 Gew. % des Aktivators, bezogen auf das Gesamtgewicht der Initiator-Komponente.

Der Wassergehalt, der in der Initiator-Komponente enthalten ist, beträgt mindestens ungefähr 1 Gew. %, vorzugsweise mindestens ungefähr 5 Gew. %, bevorzugter mindestens ungefähr 10 Gew. %, am meisten bevorzugt mindestens ungefähr 20 Gew. %, von ungefähr 1 Gew. % bis ungefähr 60 Gew. %, vorzugsweise von ungefähr 5 Gew. % bis ungefähr 50 Gew. %, bevorzugter von ungefähr 10 Gew. % bis ungefähr 40 Gew. %, am meisten bevorzugt von ungefähr 15 Gew. % bis ungefähr 30 Gew. %, bezogen auf das Gesamtgewicht der Initiator-Komponente.

Die Beschleuniger-Komponente umfasst mindestens einem Alkali- und/oder Erdalkalimetallsalz, das ausgewählt ist aus der Gruppe bestehend aus Hydroxiden, Chloriden, Sulfaten, Phosphaten, Monohydrogenphosphaten, Dihydrogenphosphaten, Nitraten, Nitriden, Carbonaten und Mischungen davon, vorzugsweise ist die Beschleuniger-Komponente ein Alkali- und/oder Erdalkalimetallsalz, ebenso vorzugsweise ist sie ein wasserlösliches Alkali- und/oder Erdalkalimetallsalz, bevorzugter ist sie ein Calciummetallsalz, wie Calciumhydroxid, Calciumsulfat, Calciumcarbonat, Calciumchlorid, Calciumformiat oder Calciumphosphat, ein Natriummetallsalz, wie Natriumhydroxid, Natriumsulfat, Natriumcarbonat, Natriumchlorid, Natriumformiat oder Natriumphosphat, oder ein Lithiummetallsalz, wie Lithiumhydroxid, Lithiumsulfat, Lithiumsulfatmonohydrat, Lithiumcarbonat, Lithiumchlorid, Lithiumformiat oder Lithiumphosphat, am meisten bevorzugt ist sie Lithiumsulfat oder Lithiumsulfatmonohydrat.

Die Initiator-Komponente umfasst mindestens ungefähr 0,01 Gew. %, vor-zugsweise mindestens ungefähr 0,05 Gew. %, bevorzugter mindestens ungefähr 0,1 Gew. %, am meisten bevorzugt mindestens ungefähr 1,0 Gew. %, von ungefähr 0,01 Gew. % bis ungefähr 25 Gew. %, vorzugsweise von ungefähr 0,05 Gew. % bis ungefähr 20 Gew. %, bevorzugter von ungefähr 0,1 Gew. % bis ungefähr 15 Gew. %, am meisten bevorzugt von ungefähr 1,0 Gew. % bis ungefähr 10 Gew. % des Beschleunigers, bezogen auf das Gesamtgewicht der Initiator-Komponente.

In einer besonders bevorzugten Ausführungsform umfasst die Aktivator-Komponente ein Alkalihydroxid und die Beschleuniger-Komponente ein Lithiumsalz. In einer noch mehr bevorzugten Ausführungsform ist die Aktivator-Komponente ein Natriumhydroxid und die Beschleuniger-Komponente Lithiumsulfat.

Die Initiator-Komponente kann ferner mindestens einen Verzögerer enthalten. Um eine ausreichende Verarbeitungszeit sicherzustellen kann mindestens ein Verzögerer, der eine vorzeitige Härtung der Mörtelzusammensetzung verhindert, in einer bestimmten Konzentration zusätzlich zu der Initiator-Komponente verwendet werden.

Der mindestens eine Verzögerer, der in der Initiator-Komponente gemäß der vorliegenden Erfindung enthalten ist, ist ausgewählt aus der Gruppe bestehend aus Zitronensäure, Weinsäure, Milchsäure, Salicylsäure, Gluconsäure und Mischungen davon, er ist vorzugsweise eine Mischung von Zitronensäure und Weinsäure. Die Initiator-Komponente umfasst mindestens ungefähr 0,1 Gew. %, vorzugsweise mindestens ungefähr 0,2 Gew. %, bevorzugter mindestens ungefähr 0,5 Gew. %, am meisten bevorzugt mindestens ungefähr 1,0 Gew. %, von ungefähr 0,1 Gew. % bis ungefähr 25 Gew. %, vorzugsweise von ungefähr 0,2 Gew. % bis ungefähr 15 Gew. %, bevorzugter von ungefähr 0,5 Gew. % bis ungefähr 15 Gew. %, am meisten bevorzugt von ungefähr 1,0 Gew. % bis ungefähr 10 Gew. % des Verzögerers, bezogen auf das Gesamtgewicht der Initiator-Komponente. In einer besonders bevorzugten Ausführungsform der Initiator-Komponente beträgt das Verhältnis von Zitronensäure/Weinsäure 1,6/1.

Die Initiator-Komponente kann ferner mindestens einen mineralischen Füllstoff enthalten. Der mindestens eine mineralische Füllstoff kann ausgewählt werden beispielweise unter Kalksteinfüllstoffen oder Quarzfüllstoffen, Quarzsand, Sand, Korund zerkleinerten Steinen, Kiesen, Kieseln und Mischungen davon, bevorzugt werden Kalksteinfüllstoffe, wie verschiedene Calciumcarbonate. Sollten Füllstoffe in der Initiator-Komponente vorhanden sein, ist am meisten bevorzugt ein Calciumcarbonat oder eine Mischung von Calciumcarbonaten. Die Initiator-Komponente kann mindestens ungefähr 20 Gew. %, vorzugsweise mindestens ungefähr 25 Gew. %, bevorzugter mindestens ungefähr 30 Gew. %, ebenso bevorzugter mindestens ungefähr 35 Gew. %, am meisten bevorzugt mindestens ungefähr 40 Gew. %, von ungefähr 20 Gew. % bis ungefähr 95 Gew. %, vorzugsweise von ungefähr 25 Gew. % bis ungefähr 90 Gew. %, bevorzugter von ungefähr 30 Gew. % bis ungefähr 85 Gew. %, ebenso bevorzugter von ungefähr 35 Gew. % bis ungefähr 80 Gew. %, am meisten bevorzugt von ungefähr 40 Gew. % bis ungefähr 75 Gew. % des mindestens einen mineralischen Füllstoffs umfassen, bezogen auf das Gesamtgewicht der Initiator-Komponente. Der mindestens eine mineralische Füllstoff wird ausgewählt, um eine Partikelgröße komplementär zu jener des aluminiumhaltigen Zements zu erhalten.

In einer vorteilhaften Ausführungsform kann die Initiator-Komponente ferner die folgenden Charakteristiken, allein oder in Kombination umfassen.

Die Initiator-Komponente kann zusätzlich ein Verdickungsmittel umfassen. Das Verdickungsmittel kann ausgewählt sein aus der Gruppe bestehend aus Bentonit, Siliciumdioxid, Quarz, Verdickungsmitteln auf der Basis von Acrylat, wie alkalilöslichen oder alkaliquellbaren Emulsionen, Quarzstaub, Ton und Titanat-Chelierungsmitteln. Angeführte Beispiele sind Polyvinylalkohol (PVA), hydrophob modifizierte alkalilösliche Emulsionen (HASE), hydrophob modifizierte Ethylenoxidurethan-Polymere, die im Stand der Technik als HEUR bekannt sind, und Cellulose-Verdickungsmittel, wie Hydroxymethylcellulose (HMC), Hydroxyethylcellulose (HEC), hydrophob modifizierte Hydroxyethylcellulose (HMHEC), Natriumcarboxymethylcellulose (SCMC), Natriumcarboxymethyl-2-hydroxyethylcellulose, 2-Hydroxypropylmethylcellulose, 2-Hydroxyethylmethylcellulose, 2-Hydroxybutylmethylcellulose, 2-Hydroxy¬ethylethylcellulose, 2-Hydroxypropylcellulose, Attapulgitton und Mischungen davon. Geeignete Verdickungsmittel sind im Handel erhältliche Produkte, wie Optigel WX (BYK-Chemie GmbH, Deutschland), Rheolate 1 (Elementis GmbH, Deutschland) und Acrysol ASE-60 (The Dow Chemical Company).

Die Initiator-Komponente kann mindestens ungefähr 0,01 Gew. %, vorzugsweise mindestens ungefähr 0,05 Gew. %, bevorzugter mindestens ungefähr 0,1 Gew. %, am meisten bevorzugt mindestens ungefähr 0,3 Gew. %, von ungefähr 0,01 Gew. % bis ungefähr 15 Gew. %, vorzugsweise von ungefähr 0,05 Gew. % bis ungefähr 10 Gew. %, bevorzugter von ungefähr 0,1 Gew. % bis ungefähr 5 Gew. %, am meisten bevorzugt von ungefähr 0,3 Gew. % bis ungefähr 1 Gew. % des Verdickungsmittels umfassen, bezogen auf das Gesamtgewicht der Initiator-Komponente.

Die Anwesenheit eines Verzögerers und Verdickungsmittels verändert die gesamte anorganische Beschaffenheit der zementartigen Initiator-Komponente nicht. Auch kann gegebenenfalls noch ein Dispergiermittel (Weichmacher) enthalten sein. Solche Dispergiermittel sind dem Fachmann bekannt.

Die Initiator-Komponente, die den Initiator umfasst, ist in wässriger Phase, vorzugsweise in der Form einer Aufschlämmung oder Paste, vorhanden.

Es wird bevorzugt, dass der pH-Wert der Initiator-Komponente über 10 liegt, bevorzugter über 11, und am meisten bevorzugt liegt er über 12, insbesondere im Bereich zwischen 10 und 14, vorzugsweise zwischen 11 und 13. Es wird besonders bevorzugt, dass die Anteile von Wasser in den beiden Komponenten, nämlich der Komponente A und Initiator-Komponente, so gewählt sind, dass das Verhältnis des Wassers zum aluminiumhaltigen Zement (W/CAC) oder des Wassers zum Calciumsulfoaluminat-Zement (W/CAS) in dem Produkt, das durch Mischen der Komponenten A und B erhalten wird, kleiner ist als 1,5, vorzugsweise zwischen 0,3 und 1,2, am meisten bevorzugt zwischen 0,4 und 1,0.

Die aluminathaltige Komponente kann wie folgt zubereitet werden: das phosphorhaltige Blockierungsmittel wird mit Wasser gemischt, so dass der pH-Wert der erhaltenen Mischung ungefähr 2 ist. Der Weichmacher wird gegebenenfalls zugesetzt und die Mischung wird homogenisiert. Aluminiumhaltiger Zement, gegebenenfalls Calciumsulfat und gegebenenfalls ein mineralischer Füllstoff werden vorgemischt und der Mischung schrittweise zugesetzt, während die Rührgeschwindigkeit erhöht wird, so dass der pH-Wert der erhaltenen Mischung ungefähr 4 ist. Schließlich werden gegebenenfalls das Verdickungsmittel und das antimikrobielle/Biozid-Mittel zugesetzt und bis zur vollständigen Homogenisierung der Mischung gemischt.

Die Initiator-Komponente kann wie folgt zubereitet werden: der Beschleuniger wird in einer wässrigen Lösung eines Aktivators gelöst, gegebenenfalls gefolgt vom anschließenden Zusatz eines Verzögerers und eines Dispergiermittels und der Homogenisierung der Mischung. Der Füllstoff oder die Füllstoffe können dann schrittweise zugesetzt werden, während die Rührgeschwindigkeit erhöht wird, bis die Mischung homogenisiert. Schließlich kann zuletzt das Verdickungsmittel bis zur vollständigen Homogenisierung der Mischung zugesetzt werden.

Die aluminathaltige Komponente und die Initiator-Komponente liegen in wässriger Phase vor, vorzugsweise in der Form einer Aufschlämmung oder Paste, besonders bevorzugt in Form einer wässrigen Suspension. Insbesondere haben die aluminathaltige Komponente und die Initiator-Komponente ein pastenartiges bis fluidisches Aussehen gemäß ihren jeweiligen Zusammensetzungen. In einer bevorzugten Ausführungsform sind die aluminathaltige Komponente und die Initiator-Komponente in Form einer wässrigen Suspension, wodurch ein Absetzen zur Zeit des Mischens der beiden Komponenten verhindert wird.

Das Gewichtsverhältnis zwischen der aluminathaltigen Komponente und der Initiator-Komponente liegt vorzugsweise zwischen 10/1 und 1/1, und beträgt vorzugsweise 3/1. Vorzugsweise umfasst die Zusammensetzung der Mischung 75 Gew. % der aluminathaltigen Komponente und 25 Gew. % der Initiator-Komponente. In einer alternativen Ausführungsform umfasst die Zusammensetzung der Mischung 88 Gew. % der aluminathaltigen Komponente und 12 Gew. % der Initiator-Komponente.

Das zementöse aluminathaltige anorganische System hat eine anfängliche Absetzzeit von mindestens 5 min aufweist, vorzugsweise von mindestens 10 min, bevorzugter von mindestens 15 min, am meisten bevorzugt von mindestens 20 min, insbesondere im Bereich von ungefähr 5 bis 25 min, vorzugsweise im Bereich von ungefähr 10 bis 20 min, nach dem Mischen der beiden Komponenten.

Die Schraube, die in der erfindungsgemäßen Befestigungsanordnung zum Einsatz kommt, kann beispielsweise eine gewindeformende Schraube sein, wie eine Betonschraube oder dergleichen.

Der Begriff *"gewindeformende Schraube"* soll so verstanden werden, dass damit sowohl *"gewindefurchende Schraube",* die ihr Gegengewinde spanlos furcht, wobei der umgebende Werkstoff verfestigt wird, der auch das Muttergewinde bildet, als auch *"gewindeschneidende Schraube",* die ihr Gegengewinde spanend schneidet und die überwiegend in ein vorgebohrtes Loch, insbesondere Sackloch eingeschraubt wird, umfasst sein sollen.

Unter gewindeformende Schraube kann insbesondere eine Solche Schraube verstanden werden, die einen Schaft und ein Gewinde mit einem Gewindeaußendurchmesser und einer Gewindesteigung aufweist. Insbesondere liegt das Verhältnis von Gewindeaußendurchmesser zu Gewindesteigung im Bereich von 1,0 bis 2,0, bevorzugt von 1,2 bis 1,6 und weiter bevorzugt von 1,2 bis 1,45. In der Regel sind Wendel und Schaft aus einem Material gefertigt und sind einstückig. Wendel und Schaft können alternativ auch aus unterschiedlichen Materialien bestehen.

Die erfindungsgemäße Befestigungsanordnung wird mit gewindeformenden Schrauben in Löchern verwendet.

Die Löcher können Vertiefungen natürlichen oder nicht-natürlichen Ursprungs sein, also Risse, Spalten, Bohrlöcher und dergleichen. Es sind typischerweise Sacklöcher oder Bohrlöcher, insbesondere Bohrlöcher in verschiedenen Substraten, insbesondere mineralischen Baustoffen oder Untergründen, wie solche auf der Grundlage von Beton, Porenbeton, Ziegelwerk, Kalksandstein, Sandstein, Naturstein, Glas und dergleichen, und metallischen Untergründen, wie solche aus Stahl. Bevorzugt ist das Substrat Beton.

Beim Setzen der gewindeformenden Schraube in das vorgefertigte Loch in einem Substrat greift die Wendel des Gewindes in ein Gegengewinde in dem Substrat, welches dies Schraube beim Eindrehen formt, im Substrat ein. Insbesondere greift die Wendel nicht vollständig in das Gegengewinde in dem Substrat ein, damit ein hinreichend großer Spalt zwischen dem Schraubenschaft und der Lochwand verbleibt, der mit der aushärtbaren Masse befüllt werden kann.

Die erfindungsgemäße Befestigungsanordnung wird erstellt, indem in einem Substrat ein Loch erstellt, das mehrkomponentige zementöse aluminathaltige anorganische System eingebracht und die gewindeformende Schraube gesetzt wird.

Beispielsweise kann die Befestigungsanordnung erstellt werden, indem in einem Betonbauteil ein Sackloch gebohrt, das mehrkomponentige zementöse aluminathaltige anorganische System in Form eines Zweikammersystems, insbesondere Zweikammer-Beutelsystem eingebracht und die gewindeformende Schraube schlagdrehend gesetzt wird. Durch das Drehen der Schraube während des Setzens wird das Zweikammersystem zerstört, das heißt geöffnet, und die Komponenten des zementösen aluminathaltigen anorganischen Systems gemischt. Die Mischung wird in den Spalt zwischen der Sacklochwand und der Schraube gedrückt und härtet dort aus, um die ausgehärtete Masse zu bilden. Die Verpackung des Zweikammersystems wird entweder zermahlen oder zumindest zerkleinert. Selbst wenn die Verpackung nicht zermahlen, sondern nur zerkleinert wird, so beeinträchtigt dies die Leistungsfähigkeit der Befestigungsanordnung nicht.

Insbesondere wird die Befestigungsanordnung für Befestigungszwecke verwendet werden, die eine Erhöhung der Lastkapazität bei Temperaturen über der Raumtemperatur oder bei erhöhten Temperaturen umfassen, wie über 80 °C, und/oder eine Erhöhung der Bindefestigkeit im gehärteten Zustand umfassen. Eine erhöhte Temperaturbeständigkeit führt zu einer besseren Betriebsleistung für Befestigungszwecke auch bei höheren Temperaturen, wie Temperaturen, die im Bereich eines Bohrlochs von Fassadenbefestigungen vorhanden sind, welche starkem Sonnenlicht oder auf andere Weise erhöhten Temperaturen ausgesetzt sind.

Die folgenden Beispiele veranschaulichen die Erfindung, ohne sie dadurch einzuschränken.

### Beispiele:

### 1. Herstellung der aluminathaltigen Komponente und der Initiator-Komponente

Die aluminathaltige Komponente sowie die Initiator-Komponente werden anfänglich durch Mischen der Bestandteile hergestellt, die jeweils in Tabelle 1 und 2 spezifiziert sind. Die Anteile, die angegeben werden, sind in Gew. % ausgedrückt.

**Tabelle 1: Zusammensetzung der aluminathaltigen Komponente A1:**

| **Bestandteile der aluminathaltigen-Komponente** | **Komponente A1** |
|---|---|
| Wasser | 17,17 |
| Ternal White | 80,30 |
| 85% H₃PO₄ | 0,91 |
| Na-Gluconat | 0,20 |
| Xanthan Gum | 0,50 |
| Ethacryl G | 0,90 |
| Nuosept | 0,02 |

**Tabelle 2: Zusammensetzung der Initiator-Komponenten B1 and B2:**

| **Bestandteile der Initiator-Komponente** | **Initiator-Komponente B1** | **Initiator-Komponente B2** |
|---|---|---|
| Wasser | 16,50 | 40,26 |
| NaOH (s) | 4,00 | 9,76 |
| Li₂SO₄ | 0,43 | 1,05 |
| Zitronensäure | 3,50 | 8,54 |
| Weinsäure | 2,20 | 5,37 |
| Ecodis P50 | 0,65 | 1,59 |
| Quarz F32 | 32,27 | 0,00 |
| Edelkorund 70 | 17,53 | 0,00 |
| Omyacarb 130 | 9,22 | 0,00 |
| Omyabrite 1300 X-OM | 13,30 | 32,45 |
| Optigel WX | 0,40 | 0,98 |

### 2. Mischungsverhältnis

**Tabelle 3: Mischungsverhältnis der verschiedenen Komponenten des zementösen aluminathaltigen anorganischen Systems**

| | **Verhältnis A1:B1** | **Verhältnis A1:B2** |
|---|---|---|
| **Beispiele** | 3:1 = zementöses aluminathaltiges anorganisches System **Mörtel 1** | 7.5:1 = zementöses aluminathaltiges anorganisches System **Mörtel 2** |

### 3. Bestimmung der mechanischen Leistung

Nach der Herstellung wurden beide Komponenten in einem definierten Verhältnis von Komponente A:B gemischt und in eine Kunststoff-Hartkartusche gefüllt. Die Kunststoff-Hartkartusche wurde in einen Dispenser gesteckt und die zu härtenden Masse in Bohrungen in einer Betonplatte eingespritzt. Die Bohrungen wiesen eine Tiefe von 150 mm und einen Durchmesser von 14 mm auf. Die Bohrungen wurden vor dem Einspritzen des Mörtels durch Druckluftreinigung und Bürsten gereinigt. Dann wurde in jede Bohrung eine Betonschraube mit einer konischen Spirale eingesetzt. Die Auszugsfestigkeit wurde nach 24 Stunden Aushärtung gemessen, um die Fähigkeit des Mörtels zu messen, die Verankerung des Stahlelements im Beton zu verbessern. Als Referenz wurde die gleiche Betonschraube in Bohrungen ähnlicher Abmessungen mit ähnlichem Reinigungsverfahren, aber ohne vorherige Injektion eines Mörtels installiert. Die Ergebnisse der Auszugstests sind in Tabelle 4 aufgeführt.

**Tabelle 4: Auszugswerte in kN der Betonschraube mit und ohne zementösem, aluminathaltigem, anorganischem System**

| **Auszugstest** | **Schraube** | **Schraube und Mörtel 1** | **Schraube und Mörtel 2** |
|---|---|---|---|
| **Auszugswert in kN** | 55,15 | 76,92 | 92,38 |

Durch die Verwendung eines zementösen, aluminathaltigen, anorganischen Systems mit einer Betonschraube (im Beispiel Schraubanker (Betonschraube) HUS3, Hilti, Deutschland) wird der Verbund gestärkt was zu einer Erhöhung der Lastwerte führt, welche aufgrund der hauptsächlich anorganischen Bestandteile des Mörtels auch bei hohen In-Service Temperaturen und im Brandfall erhalten bleiben.

Diese Ergebnisse zeigen auch, dass das zementöse, aluminathaltige, anorganische System, das bei Bedarf durch Zugabe eines Zusatzes wie beispielsweise Natriumhydroxid leicht gelagert und aktiviert werden kann, die Belastungswerte einer Betonschraube in Beton deutlich verbessern kann. Darüber hinaus führt der Einsatz einer Initiator-Komponente mit niedrigem Füllgrad und nur feinem Füllstoff zu einer einfacheren Setzbarkeit der Betonschraube und erhöht die Belastungswerte bei sehr geringer Streuung.

## Patentansprüche

**1.** Befestigungsanordnung
- mit einer Schraube, welche einen Schaft und zumindest eine Gewindewendel aufweist, wobei die Gewindewendel am Schaft angeordnet ist, und
- mit einer aluminathaltigen anorganischen ausgehärteten Masse,
wobei die Schraube in einem Loch in einem Substrat angeordnet ist und zwischen dem Schaft und der Lochwand ein Spalt vorgesehen ist, welcher mit der ausgehärteten Masse gefüllt ist,
**dadurch gekennzeichnet, dass**
die aluminathaltige anorganische ausgehärtete Masse durch Härtung eines mehrkomponentigen zementösen Systems erhältlich ist, das in einer Komponente mindestens einen aluminathaltigen Zement-Bestandteil und mindestens ein Blockierungsmittel, ausgewählt aus der Gruppe bestehend aus Phosphorsäure, Metaphosphorsäure, phosphoriger Säure, Phosphonsäuren, Borsäure, in wässriger Phase, und in einer weiteren Komponente einen Initiator für den aluminathaltigen Zement-Bestandteil enthält.

**2.** Befestigungsanordnung nach Anspruch 1, **dadurch gekennzeichnet, dass** der Initiator eine Mischung von Alkali- und/oder Erdalkalimetallsalzen umfasst.

**3.** Befestigungsanordnung nach Anspruch 1 oder 2, **dadurch gekennzeichnet, dass** der Initiator aus einer Aktivator-Komponente und einer Beschleuniger-Komponente besteht.

**4.** Befestigungsanordnung nach Anspruch 3, wobei die Aktivator-Komponente Alkalihydroxid umfasst und die Beschleuniger-Komponente ein Lithiumsalz umfasst.

**5.** Befestigungsanordnung nach Anspruch 4, wobei die die Aktivator-Komponente Natriumhydroxid und die Beschleuniger-Komponente Lithiumsulfat ist.

**6.** Befestigungsanordnung nach einem der vorhergehenden Ansprüche, **dadurch gekennzeichnet, dass** in der weiteren Komponente ein Verzögerer enthalten ist, ausgewählt ist aus der Gruppe bestehend aus Zitronensäure, Weinsäure, Milchsäure, Salicylsäure und Gluconsäure und Mischungen davon vorzugsweise Zitronensäure, Weinsäure oder eine Mischung davon.

**7.** Befestigungsanordnung nach einem der vorhergehenden Ansprüche, **dadurch gekennzeichnet, dass** in der weiteren Komponente mindestens ein mineralischer Füllstoff enthaltend ist, ausgewählt ist aus der Gruppe bestehend aus Kalksteinfüllstoffen, Sand, Korund, Dolomit, alkalibeständigem Glas, zerkleinerten Steinen, Kiesen, Kieseln und Mischungen davon.

**8.** Befestigungsanordnung nach einem der vorhergehenden Ansprüche, **dadurch gekennzeichnet, dass** der aluminathaltige Zement-Bestandteil auf einem Calciumaluninat-Zement (CA) in wässriger Phase oder einem Calciumsulfoaluminat-Zement (CAS) in wässriger Phase basiert.

**9.** Befestigungsanordnung nach einem der vorhergehenden Ansprüche, **dadurch gekennzeichnet, dass** der pH-Wert der weiteren Komponente über 10 beträgt.

**10.** Befestigungsanordnung nach einem der vorhergehenden Ansprüche, **dadurch gekennzeichnet, dass** die aluminathaltige Komponente ferner einen Weichmacher umfasst.

**11.** Befestigungsanordnung nach einem der vorhergehenden Ansprüche, **dadurch gekennzeichnet, dass** die aluminathaltige Komponente und die weitere Komponente in Form einer wässrigen Suspension vorliegen.

**12.** Befestigungsanordnung nach einem der vorhergehenden Ansprüche, **dadurch gekennzeichnet, dass** das Substrat ein mineralischer Baustoff, insbesondere Beton ist.

**12.** Befestigungsanordnung nach einem der vorhergehenden Ansprüche, **dadurch gekennzeichnet, dass** die Gewindewendel in ein Gegengewinde im Substrat eingreift.

**14.** Befestigungsanordnung nach einem der vorhergehenden Ansprüche, **dadurch gekennzeichnet, dass** die Gewindewendel einen Gewindeaußendurchmesser und eine Gewindesteigung hat, wobei das Verhältnis von Gewindeaußendurchmesser zu Gewindesteigung im Bereich von 1,0 bis 2,0, bevorzugt von 1,2 bis 1,6 liegt.

**15.** Befestigungsanordnung nach einem der vorhergehenden Ansprüche, **dadurch gekennzeichnet, dass** die Schraube eine Betonschraube ist.
